# EUROPEAN PATENT APPLICATION

(11) **EP 2 530 602 A2**
(43) Date of publication of application: **05.12.2012**
(21) Application number: 12169966.4
(22) Date of filing: 30.05.2012
(51) Int. Cl.: G06F 13/42

(54) **Method, system and computer-readable medium for switching access mode of hard drive**

(30) Priority: 30.05.2011 US 201161491229 P
(71) Applicant: Giga-Byte Technology Co., Ltd., New Taipei City 231 (TW)
(72) Inventor: Chang, Shih Pin, 231 Hsin Tien (TW); Lin, Hou-Yuan, 231 New Taipei City (TW)
(74) Representative: Schwerbrock, Florian

(57) **Abstract**

A method for switching access mode of a hard drive is provided. The method includes the following steps: detecting and writing digitally current access mode as a current registry code of a system registration information by a processing unit, then overwriting the current registry code with a new registry code that corresponds to a new access mode other than the current access mode by the processing unit, and then reloading the system registration information by the processing unit, and then changing the current access mode to the new access mode correspondingly by a Basic Input/Output System (BIOS). In addition, a system executing the method and a computer-readable medium encoded with processing instructions for implementing the method are also provided.

## Description

### BACKGROUND OF THE INVENTION

### Field of Invention

This invention is relative to a method, a system and a computer-readable medium for switching access mode of a hard drive; in particular, relative to a method, a system and a computer-readable medium having processing instructions for implementing the method performed by a computer thereon for switching access mode of hard drive directly without any formatting process of the hard drive.

### Related Art

As information storage and hardware technology advance, storage devices of new generation are being developed continuously, and requirements for both storage capacity and accessing speed thereof are also increasing. Therefore, Solid State Drives (SSDs) with higher accessing speed have been developed.

Unlike traditional hard drives such as hard disk drives (HDDs) which are electromechanical devices containing spinning disks and movable read/write heads, solid state drives do not employ any moving mechanical components but use Non-volatile memory (NVRAM) or Volatile memory to store the data, in which information or data is stored in a memory chip to be written or read directly through BUS transmission.

Compared with traditional hard drives, SSDs are typically less susceptible to physical shock, are silent, and have lower access time and latency, since they are essentially semiconductor memory devices mounted on a circuit board with no moving parts. Most advantages of SSDs over traditional hard drives come from the characteristic of data being accessed completely electronically instead of electro-mechanically.

Generally, because having no moving parts for storing the data, SSDs can achieve faster data access, greatly improving the performance of the computer. However, in spite of the above advantages, SSDs are much more expensive per unit of storage than traditional magnetic drives at present market prices, mainly due to the use of Non-volatile memory or Volatile memory.

For providing hard drives with high speed of data access at lower price, some manufacturers combined the features of SSD and HDD in the same unit to introduce "hybrid drives" containing a hard drive of large storage capacity and an SSD cache to improve performance of frequently accessed data. They may offer near-SSD performance for many applications. For example, Smart Response Technology (SRT) introduced by Intel^{®} for their Z68 chipset allows a SATA SSD to function as cache for a traditional magnetic hard drive, and a hybrid storage has been developed by Marvell^{®} by combining an SSD for a performance boost and an HDD for high capacity storage. During the combination thereof, the HDD has to be set to run in Redundant Array of Independent Drives (RAID) access mode; that is, the SSD and the HDD have to be combined into a logic drive and used as a hard drive array.

However, the default access mode of the HDD is commonly Non-Redundant Array of Independent Drives (Non-RAID) modes such as Integrated Drive Electronics (IDE) mode. If a user intends to change the access mode of the HDD into RAID mode, he has to format the magnetic hard drive first and then reset the access mode of the HDD through a Basic Input/Output System (BIOS) of the computer. During the formatting process, the files stored in the HDD will be deleted completely, so the user has to perform data backup prior thereto. Even only traditional hard drives are used, it is necessary for the hard drive to be subject to the formatting process so as to change the access mode of the hard drive. This is really time-consuming and inconvenient for the user.

### SUMMARY OF THE INVENTION

In view of this, the object of the present invention is to solve the aforesaid problem by providing a method, a system and a computer-readable medium encoded with processing instructions for implementing the method for switching access mode of the hard drive directly without any formatting process of the hard drive.

The present invention discloses a method for switching access mode of a hard drive, the hard drive having a plurality of access modes, the method comprising steps of: detecting and writing digitally current access mode as a current registry code of a system registration information by a processing unit, then overwriting the current registry code with a new registry code that corresponds to a new access mode other than the current access mode by the processing unit, and then reloading the system registration information by the processing unit, and then changing the current access mode to the new access mode correspondingly by a Basic Input/Output System (BIOS).

Corresponding to aforesaid method, the present invention also discloses a system for switching access mode of a hard drive, the system includes the hard drive, a Basic Input/ Output System (BIOS) and a processing unit. The hard drive has a plurality of access modes and stores a system registration information comprising a registry code, the registry code is digitally corresponded to the access mode of the hard drive, the BIOS electrically connects to the hard drive and sets the access mode of the hard drive, and the processing unit electrically connects to the hard drive and the BIOS respectively. The system is capable of switching the access mode of the hard drive by performing a method comprising steps of: generating and transmitting a signal for switching the access mode from the BIOS to the processing unit, modifying the registry code to a new registry code by the processing unit according to the signal, saving the new registry code and reloading the system registration information by the processing unit, and changing the access mode of the hard drive correspondingly by the BIOS.

Besides, Corresponding to aforesaid method, the present invention also discloses a computer-readable medium encoded with processing instructions for implementing a method for switching access mode of a hard drive performed by a computer, the method comprises following steps: detecting and writing digitally current access mode as a current registry code of a system registration information by a processing unit, then overwriting the current registry code with a new registry code that corresponds to a new access mode other than the current access mode by the processing unit, and then reloading the system registration information by the processing unit, and then changing the current access mode to the new access mode correspondingly by a Basic Input/ Output System (BIOS).

The present invention is advantageous in that when a user intends to change the access mode of the hard drive, he may start with modifying and overwritting the registry code corresponding to the accessing mode of the hard drive, followed by reloading the system registration information. Since the formatting process of the hard drive is not required, it will be time-saving and more convenient for the user.

Meanwhile, the present invention is also applicable to the hard drive array system, which combines for example the solid state drive and the magnetic hard drive, from Non-RAID mode to RAID mode. A user may simply execute the solid state drive setup program provided by the hard drive manufacture without formatting process when combining the solid state drive and the magnetic hard drive. This significantly saves troubles, time and difficulty for the user if a solid state drive with low storage and a magnetic hard drive with high storage are combined for writing/reading data.

Further objects, embodiments and advantages are apparent in the drawings and in the detailed description which follows.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 illustrates a schematic view of a system for switching access mode of a hard drive;
FIG. 2 illustrates a flow chart of a method for switching access mode of a hard drive according to a first embodiment of the present invention;
FIG. 3 illustrates a schematic view of the method for switching access mode of the hard drive according to the first embodiment of the present invention;
FIG. 4 illustrates a flow chart of a method for switching access mode of a hard drive according to a second embodiment of the present invention; and
FIG. 5 illustrates a schematic view of the method for switching access mode of the hard drive according to the second embodiment of the present invention.

### DETAIL DESCRIPTION OF THE INVENTION

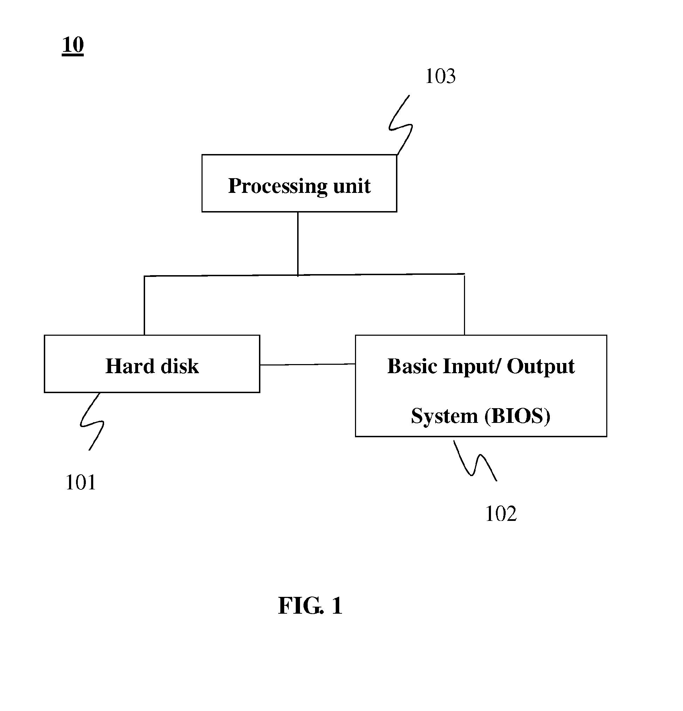

FIG. 1 is a schematic view of a system 10 for switching hard drive access mode configured for a computer having a hard drive. Referring to FIG. 1, the system 10 includes a hard drive 101, a Basic Input/Output System (BIOS) 102 and a processing unit 103. The hard drive 101 can be executed in different access modes such as an Integrated Drive Electronics (IDE) mode, a Redundant Array of Independent Drives (RAID) mode and an Advanced Host Controller Interface (AHCI) mode. When the hard drive 101 is first installed in the computer, a hard drive access mode therefor is set for the following data transfer (read/write) operations. Besides, a hard drive driver is stored in the hard drive 101 for driving the operation of the hard drive 101 in the above access mode. Generally, the hard drive driver is installed together with the first installation of the hard drive 101, while the hard drive 101 may select a built-in hard drive driver as the driver program. Whenever the computer boots, the hard drive driver is normally loaded to instruct the hard drive 101 of the computer to execute corresponding operations.

Besides, system registration information having a registry code is also stored in the hard drive 101. The registry code of the system registration information indicates digitally the access mode of the hard drive 101 that will be identified by the operating system of the computer. The operating system or other application programs execute read/write operations to the hard drive 101 based on the current access mode indicated by the registry code. For example, if the access mode of the hard drive 101 is set as the Integrated Drive Electronics (IDE) mode, the registry code written digitally as, for example "0", is also stored in the hard drive 101 as the current registry code. When the operating system or other application programs send a data transfer instruction to the hard drive 101, the hard drive 101 executes the data transfer according to the registry code where the access mode of the hard drive 101 is written.

In the system 10 of the present invention, the Basic Input/ Output System (BIOS) 102 is electrically connected to the hard drive 101, and the access mode of the hard drive 101 is set using the Basic Input/ Output System (BIOS) 102. The processing unit 103 is electrically connected to the hard drive 101 and the Basic Input/ Output System (BIOS) 102 respectively.

It is noted that the access mode of the hard drive 101 in the present invention is not limited to those described above. Different types of hard drives may have different access modes based on hardware feature and/or demand. People with ordinary skill in this art can modify the access mode as required. Furthermore, the system registration information and registry code mentioned herein may be recorded in different ways depending on the operating system (examples: Windows, Linux, MAC OS...etc.). Hence, needless to say, people with ordinary skill may change the way of recording the system registration information or registry code as needed without departing from the spirit of the present invention.

In order to make the description of the present invention clear enough and fully disclosed for people with ordinary skill in this art to practice, two embodiments are explained in detail as follows in which two access modes of the hard drive 101 are provided. Among others, one is Non-Redundant Array of Independent Drives (Non-RAID) mode such as Integrated Drive Electronics (IDE) mode, and the other is Redundant Array of Independent Drives (RAID) mode. For the convenience of illustration, the registry codes for the Non-RAID and RAID modes are represented in terms of digits respectively by "0" and "3". However, it will be appreciated that in practical situations, access modes of the hard drive 101 may have other possible access modes, and the number of the access modes may be determined as required. In other words, in the present invention, it is possible for the switching process to occur between any two access modes if more than two access modes are provided in the hard drive.

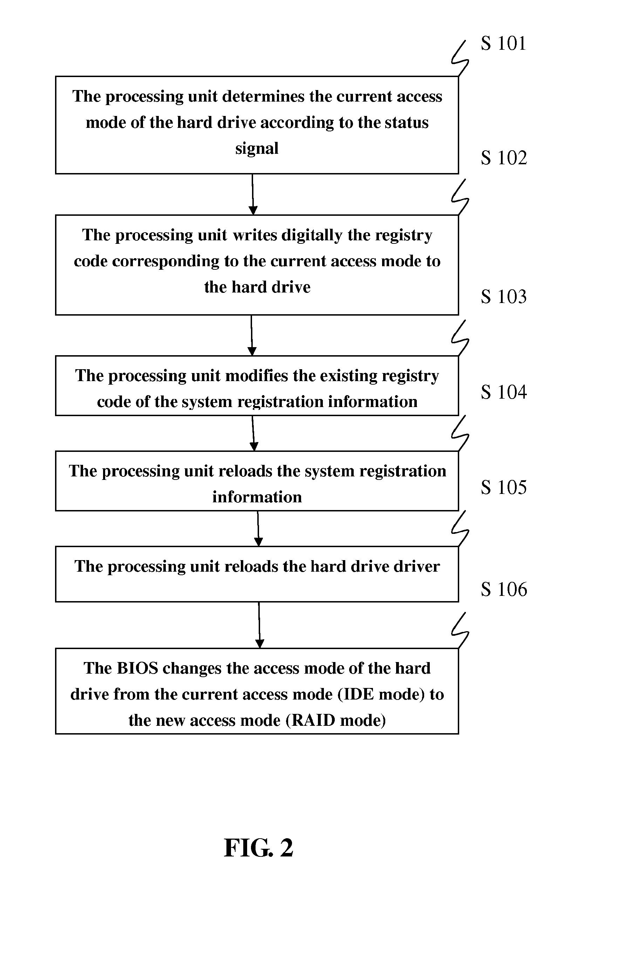

FIG. 2 is a flow chart of the method for switching access mode of hard drive 101 according to the first embodiment of the present invention. In the first embodiment, as shown in FIGs. 1 and 2, on start-up, the hard drive driver is loaded into the computer system by the processing unit 103 normally, then a detecting signal is sent to the hard drive 101. After receiving the detecting signal, the hard drive 101 returns a status signal in response thereto, and the processing unit 103 determines the current access mode of the hard drive 101 according to the status signal (S101) and writes digitally the registry code ("0") of the system registration information that corresponds to the current access mode to the hard drive 101 (S102).

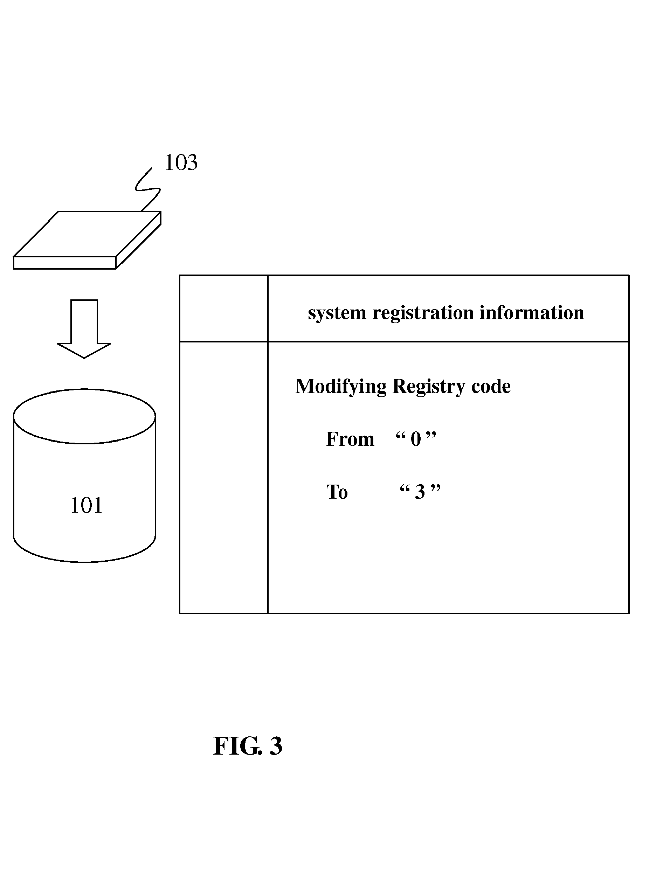

FIG. 3 illustrates a schematic view of the method for switching access mode of the hard drive according to the first embodiment of the present invention. By referring to FIGs. 1-3, when a user intends to change the access mode of the hard drive 101 from the current access mode like IDE mode to a new access mode like RAID mode by the Basic Input/ Output System (BIOS) 102, the processing unit modifies the existing registry code of the system registration information. In this embodiment, the registry code is modified from " 0 " to " 3 " (S103) and this modification is saved in the hard drive 101. Subsequently, the processing unit 103 reloads the system registration information (S104) together with the hard drive driver (S105). The computer system determines that the new access mode of the hard drive 101 is RAID mode according to the new registry code ("3"). As a final step, the Basic Input/Output System (BIOS) 102 changes the access mode of the hard drive 101 from IDE mode to RAID mode (S106). In this way, a user can switch the access mode of the hard drive 101 directly without formatting the hard drive 101.

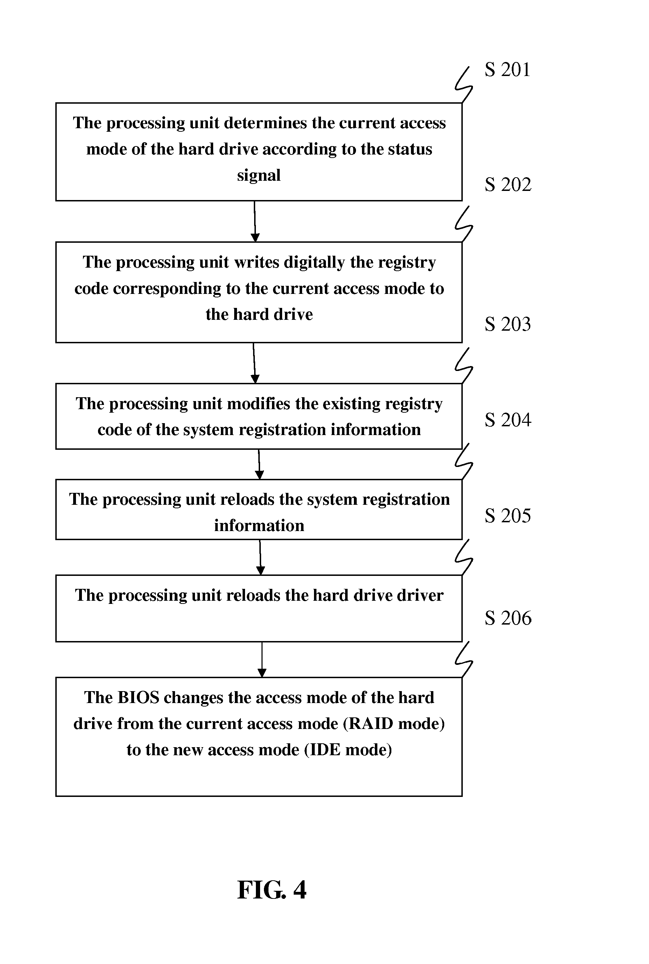

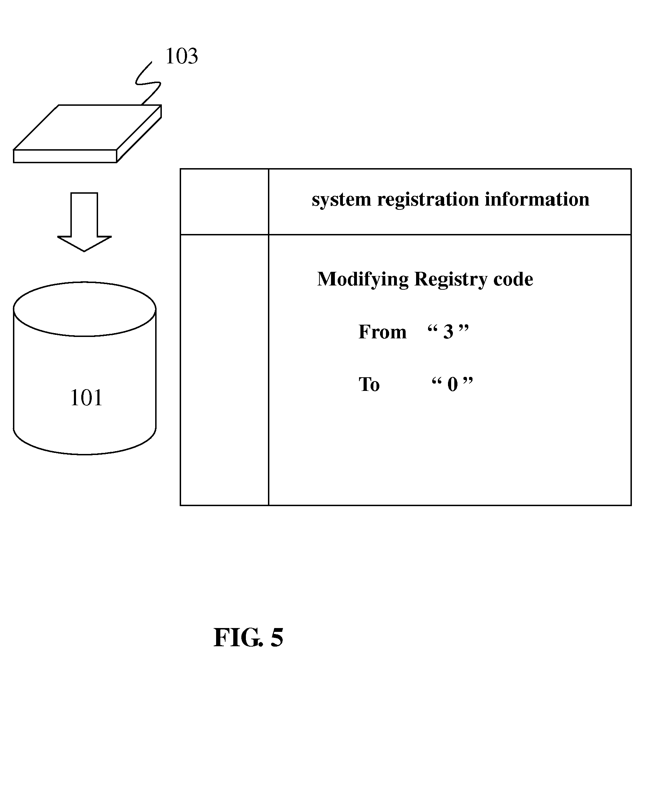

FIG. 4 illustrates a flow chart of a method for switching access mode of a hard drive according to a second embodiment of the present invention, and FIG. 5 summarizes the method according to the second embodiment. In the second embodiment, by referring to FIGs. 1 and 4, steps of determining that the access mode of the hard drive 101 is RAID mode (S201) by the processing unit 103 and writing digitally the registry code ("3") of the system registration information that corresponds to the RAID mode to the hard drive (S202) are generally similar to steps S101∼S102 in the first embodiment. Also, similar to the first embodiment, the second embodiment includes the step of changing the access mode of the hard drive 101 from the current access mode (RAID mode) to a new access mode (IDE mode) by the BIOS 102. The difference therebetween lies in the types of the current and new access modes. Briefly speaking, the registry code is modified from " 3" to " 0 " (S203) in the second embodiment as shown in FIG. 5 rather than from "0" to "3". Similarly, the system registration information may be reloaded (S204) together with the hard drive driver (S205). Hence, the access mode of the hard drive 101 has been changed from RAID mode to IDE mode according to the registry code. As a final step, using to change the access mode of the hard drive 101 is changed to IDE mode by the BIOS 102 (S206), thus finished the switching process of the access mode of the hard drive 101.

Besides, a computer-readable medium encoded with processing instructions for implementing the method for switching access mode of the hard drive 101 of the present invention performed by a computer and used for the system 10 mentioned above is also disclosed. The steps included in the method can be referred to the foresaid description and FIGs. 1-5 and will not be repeated here.

It is noted that the computer-readable medium in the present invention includes but is not limited to the forms of compact discs, hard drives, portable hard drives and any other physical storage media for storing computer programs and can be read or executed by the computer. People with ordinary skill in this art can select different kinds of physical storage media as desired.

By way of the method, system and computer-readable medium encoded with processing instructions for implementing the method, the access mode of the hard drive may be switched directly and swiftly without any hard drive formatting process. Accordingly, a lot of trouble and a waste of time from backing up data in the hard drive and re-installing the operating system and/or application programs may be prevented effectively.

By the way, the present invention is also applicable to the so-called hard drive array system, which combines for example the solid state drive and the magnetic hard drive, from Non-RAID mode to RAID mode. A user simply has to execute the solid state drive setup program provided by the hard drive manufacture when combining the solid state drive and the magnetic hard drive. This significantly saves troubles, time and difficulty for the user if a solid state drive with low storage and a magnetic hard drive with high storage are combined for writing/reading data. In this way, both the advantages of high speed performance of the solid state drive and large storage of the magnetic hard drive may be obtained at the same time, which is quite desirable to the user.

While the disclosure has been described in terms of what is presently considered to be the preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modification and similar structures. It is therefore intended by the appended claims to define the true scope of the invention.

## Claims

1. A method for switching access mode of a hard drive (101), the hard drive (101) having a plurality of access modes, the method **characterized by** comprising steps of:
detecting and writing digitally current access mode as a current registry code of a system registration information by a processing unit (103);
overwriting the current registry code with a new registry code that corresponds to a new access mode other than the current access mode by the processing unit (103);
reloading the system registration information by the processing unit (103); and
changing the current access mode to the new access mode correspondingly by a Basic Input/Output System (BIOS) (102).

2. The method according to claim 1, **characterized in that** the step of reloading the system registration information further comprises a step of reloading a hard drive driver by the processing unit (103) of the computer.

3. The method according to claim 1, **characterized in that** the current access mode is Non-Redundant Array of Independent Drives mode (Non-RAID mode) and the new access mode is Redundant Array of Independent Drives mode (RAID mode), or the current access mode is Redundant Array of Independent Drives mode (RAID mode) and the new access mode is Non-Redundant Array of Independent Drives mode (Non-RAID mode).

4. A system (10) for switching access mode of a hard drive (101), the system (10) **characterized by** comprising:
the hard drive (101) having a plurality of access modes and storing a system registration information comprising a registry code, the registry code digitally corresponding the access mode of the hard drive (101);
a Basic Input/ Output System (BIOS) (102) electrically connected to the hard drive (101) and setting the access mode of the hard drive (101); and
a processing unit (103) electrically connected to the hard drive (101) and the Basic Input/ Output System (102) respectively,
wherein the processing unit (103) generates and transmits a signal for switching the access mode from the BIOS (102) thereto, the processing unit (103) also modifies the registry code to a new registry code according to the signal, saves the new registry code and reloads the system registration information, and the BIOS (102) changes the access mode of the hard drive (101) correspondingly.

5. The system (10) according to claim 4, **characterized in that** the processing unit (103) further sends a detecting signal to the hard drive (101), the hard drive (101) receives the detecting signal and returns a status signal correspondingly, the processing unit (103) determines the new access mode of the hard drive (101) according to the status signal and writes the registry code that corresponds to the new access mode of the hard drive (101) in the system registration information.

6. The system (10) according to claim 4, **characterized in that** at least one hard drive driver is stored in the hard drive (101), the hard drive driver serves the hard drive (101) to operate in any of the access modes, and the hard drive driver is also loaded by the processing unit (103) when reloading the system registration information.

7. A computer-readable medium encoded with processing instructions for implementing a method for switching access mode of a hard drive (101) performed by a computer, the method **characterized by** comprising:
detecting and writing digitally current access mode as a current registry code of a system registration information by a processing unit (103);
overwriting the current registry code with a new registry code that corresponds to a new access mode other than the current access mode by the processing unit (103);
reloading the system registration information by the processing unit (103); and
changing the current access mode to the new access mode correspondingly by a Basic Input/ Output System (BIOS) (102).

8. The computer-readable medium according to claim 7, **characterized in that** the step of reloading the system registration information by the processing unit (103) further comprises a step of reloading a hard drive driver.

9. The computer-readable medium according to claim 7, **characterized in that** the current access mode is Non-Redundant Array of Independent Drives mode (Non-RAID mode) and the new access mode is Redundant Array of Independent Drives mode (RAID mode), or the current access mode is Redundant Array of Independent Drives mode (RAID mode) and the new access mode is Non-Redundant Array of Independent Drives mode (Non-RAID mode).
